# EUROPEAN PATENT APPLICATION

(11) **EP 4 534 394 A1**
(43) Date of publication of application: **09.04.2025**
(21) Application number: 24181423.5
(22) Date of filing: 11.06.2024
(51) Int. Cl.: B62J 1/00, B62J 1/08, B62J 1/10

(54) **SADDLE WITH LAMINA-RAIL ATTACHMENT**

(30) Priority: 15.06.2023 IT 202300012264
(71) Applicant: Velo Europe S.R.L., 20123 Milano (MI) (IT)
(72) Inventor: TRUGLIO, Salvatore, 20874 BUSNAGO (MONZA BRIANZA) (IT)
(74) Representative: Casadei, Giovanni

(57) **Abstract**

A saddle (1) for a bicycle comprising:
-a shell (2) which has a longitudinal axis (X) and is provided with a front portion (21) and a rear portion (22), aligned along the longitudinal axis (X);
-a support frame (3), connected to the shell (2), which is arranged to be connected to a saddle post (4) and which comprises a sheet having a section (C) belonging to a transverse plane (P) perpendicular to the longitudinal axis (X);
wherein the sheet comprises a medial portion (33) and two lateral portions (34,34'); in the section (C), the lateral portions (34,34') have a thickness H, greater than a thickness h of the medial portion (33).

Assembly (10) for a bicycle having a main frame and comprising the saddle (1) and a saddle post (4), comprising constraining means (8) arranged to constrain the saddle post (4) to the saddle (1) and coupling means arranged to constrain the saddle post (4) to the frame of the bicycle.

## Description

The present invention relates to a saddle for vehicles.

In the present disclosure, particular reference will be made to the bicycles sector, without nonetheless excluding the possibility of adapting the object of the present invention to other types of vehicles.

In a bicycle, the saddle is a fundamental element for allowing a safe use and guaranteeing an optimal level of comfort for a user.

Saddle means the portion of a bicycle that allows the user to use the bicycle in a seated position; in order to achieve this purpose, the saddle comprises a support surface and connection and adjustment means, indispensable to constrain the support surface to a remaining frame.

The frame constitutes the main structure of the bicycle or, in other words, the skeleton, to which further, fundamental elements are constrained, such as the wheels, the pedals and the handlebar.

Saddles comprising a shell and a support frame are known in the prior art. The shell is an element arranged to allow the seated support of the user and is typically padded to guarantee a sufficient level of comfort, particularly when the bicycle is in movement.

Furthermore, the shell has a sufficiently rigid structure, so as not to suffer deformations caused by the weight of the user: most of the user's weight does, in fact, fall precisely on the shell and is then transmitted to a plurality of underlying components. Various combinations of materials, known in the art, are used for manufacture of the shell, in order to guarantee the dual function of comfort and support.

The support frame of the shell is arranged to provide a further support element. In the prior art, support frames called "rails" are known, comprising a pair of metal bars called stems: each stem is connected to the lower portion of the shell, following its longitudinal extension.

The stems, thus positioned, are an element capable of improving the technical features of the shell, in terms of resistance and durability over time: the shell, in fact, being subject both to the weight of the user and to the stresses caused by the motion of the bicycle, and without a further support element, would be destined to break rapidly, after a brief period of use.

However, use of the stems has not insignificant limits, in particular from the perspective of solidity: the bars, in fact, typically have a highly reduced cross-section with respect to their longitudinal extension; the result is that the stems are fragile and contribute only in part to absorbing the stresses deriving from the motion of the bicycle.

An improvement mentioned in the prior art consists of replacing the stems described above with a sheet support frame of the shell, more simply called a "sheet" or "leaf", in an elastic material; "sheet" means a plate-like element, i.e. of reduced thickness and with a mainly longitudinal extension.

The sheet is connected below to the shield, in a substantially similar manner to the metal stems described above.

The sheet, due to the elastic material used and to the different spatial configuration, guarantees an improved structural resistance and an improved elastic behaviour in response to the stresses transmitted by the bicycle in motion, with respect to the stem support elements.

However, the saddle of the prior art can be further improved in terms of mechanical performance and integration into the main frame of the bicycle. The object of the present invention is to provide a saddle for a bicycle capable of improving the prior art and overcoming its main limitations. Features and advantages of the present invention will more fully emerge from the following detailed description of an embodiment of the present invention, as illustrated in a non-limiting example in the accompanying figures, in which:

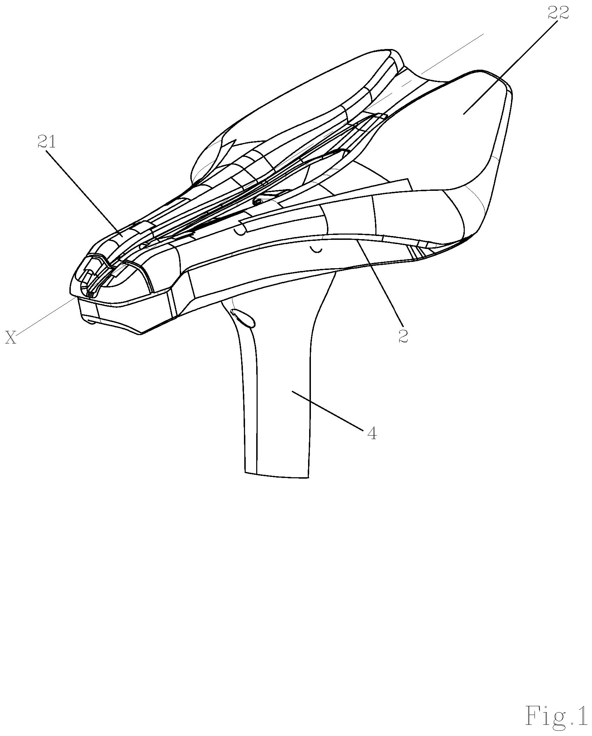

- Figure 1 shows a top isometric view of an assembly comprising the saddle according to the present invention;

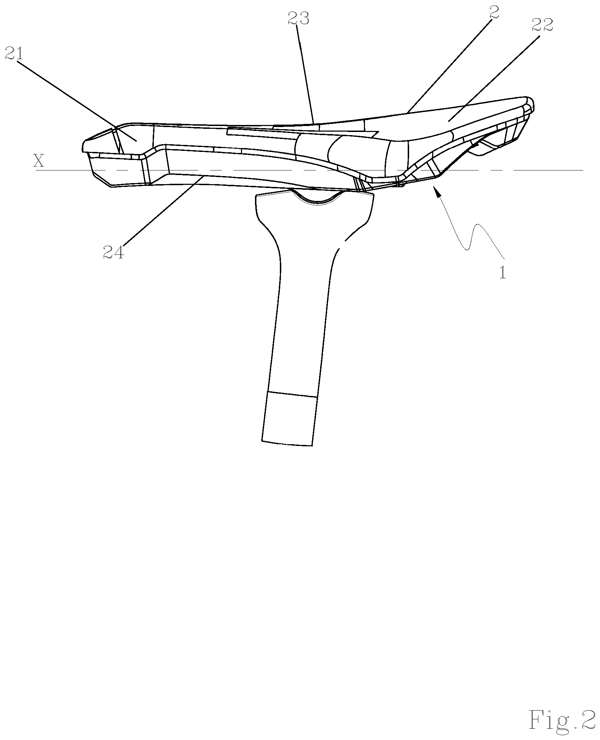

- Figure 2 shows a side view of the assembly of Fig.1;
- Figure 3 shows a rear view of the assembly of Fig.1;

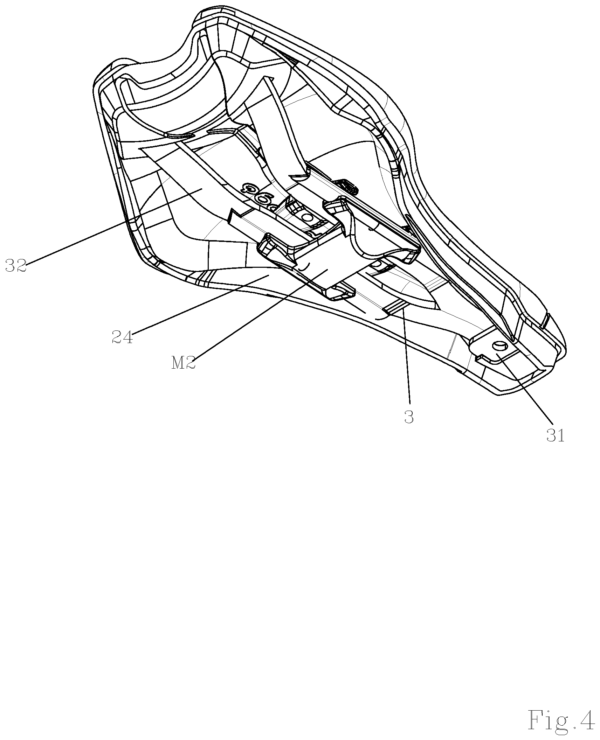

- Figure 4 shows a bottom isometric view of the saddle according to the present invention;

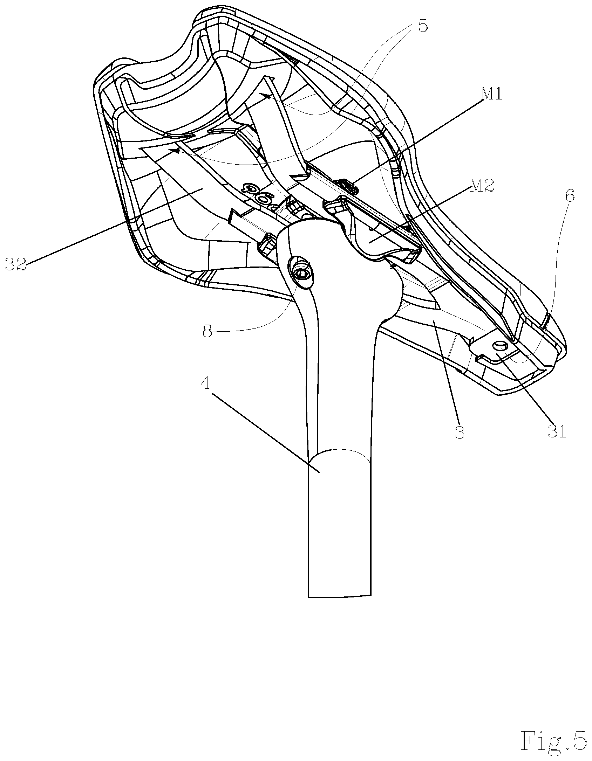

- Figure 5 shows a bottom isometric view of the assembly of Fig.1.

The object of the present invention is a saddle (1) comprising a shell (2) and a support frame (3).

In the description, reference will be made to a saddle for a bicycle; however, other types of vehicle are not excluded. Machines destined for gymnastic use are also not excluded.

The shell (2) is the element arranged to allow seating of a user. The shell (2) has a longitudinal axis (X) and comprises a front portion (21) and a rear portion (22) aligned along said longitudinal axis (X). Furthermore, an upper surface (23) and a lower surface (24) are identifiable; the upper surface (23) is arranged to enter into contact with the user. In particular, the user is seated on the saddle (1) resting on the upper surface (23) of the shell (2). In order to guarantee the right level of comfort during use of the bicycle, the shell (2) advantageously has a padding or a plurality of padding elements: padding or padding elements means one or more inserts in a soft, deformable and shock-absorbing material.

The shell (2), comprising said padding, does, in fact, determine a reduced transmission to the user of the vibrations that occur during use of the bicycle. Shock-absorbing materials for padding are known in the art.

The shell (2) may further comprise inserts in a non-slip material, arranged to avoid undesired slipping of the user along the saddle (1), in particular when the bicycle is in movement. The non-slip material is mainly positioned at the upper surface (23) of the shell (2). Furthermore, the non-slip material may partially or totally involve the upper surface (23) of the shell (2).

Non-slip materials are also known in the art.

The saddle (1), furthermore, must be sufficiently resistant, in order to avoid wear and tear or breakage caused by repeated uses of the bicycle. The shell (2), without a further support element, is not able to guarantee sufficient resistance to the stresses for a prolonged period of use.

Advantageously, therefore, the saddle (1) comprises the support frame (3) as a support element for the shell (2).

The support frame (3) is arranged to increase the mechanical resistance of the saddle (1) to the stresses that occur during and after repeated uses of the bicycle. In other words, the support frame (3), inside the saddle (1), is the element arranged to reinforce the structure of the shell (2).

Stresses means both the stresses to which the saddle (1) is subjected and the stresses to which the user is subjected while the bicycle is in movement. Mainly, but not exclusively, the stresses that are transmitted to the saddle (1) and to the user are torsional loads, and perpendicular loads to the longitudinal axis (X).

The support frame (3) is preferably, but not exclusively, constrained to the lower surface (24) of the shell (2) by connection means (5).

Preferably, the support frame (3) is connected to the shell (2) dismountably, by connection means (5).

The material used for manufacture of the support frame (3) is such as to guarantee adequate mechanical features, according to the design needs detailed above; materials of this type are known in the art.

The support frame (3) of the saddle (1) according to the present invention comprises a sheet.

The term "sheet" means, in this context, a structure comprising an upper surface, a lower surface and a plurality of lateral sides, in which the distance between the lateral sides is substantially greater than the distance between the upper surface and the lower surface.

A plurality of geometries or combinations of geometries therefore falls within the term "sheet".

In the description, reference will be made to the term sheet to indicate the component of the support frame (3) provided with the particular geometric features specified above.

Preferably, but not exclusively, the sheet has a main extension along the longitudinal axis (X). However, other configurations and spatial arrangements are permitted.

In particular, the sheet comprises a front end portion (31), at at least one front side, and a rear end portion (32), at at least one rear side; in other words, the front end portion (31) and the rear end portion (32) are aligned with said longitudinal axis (X).

The front end portion (31) and the rear end portion (32) are arranged to be constrained preferably, but not exclusively, respectively to the front portion (21) and to the rear portion (22) of the shell (2), at its lower surface (24). The sheet of the saddle (1) according to the present invention further comprises a medial portion (33) and two lateral portions (34,34'), with respect to the longitudinal axis (X).

With a transverse plane (P) defined, substantially perpendicular to the longitudinal axis (X), the sheet has a section (C) belonging to the transverse plane (P).

The saddle (1) according to the present invention is characterised in that the sheet of the support frame (3) has a medial portion (33) and two lateral portions (34,34'): in particular, the medial portion (33) in the section (C) has a thickness h, whereas the two lateral portions (34,34') have a thickness H. According to the present invention, the thickness H of the lateral portions (34,34') is different to the thickness h of the medial portion (33).

In particular, and preferably, the thickness h of the medial portion (33) is lower than the thickness (H) of the lateral portions (34.34').

In other words, the lateral portions (34,34') have, in the section (C) belonging to the transverse plane (P), a thickness H greater than the thickness h identified by the medial portion in said section (C). Furthermore, the lateral portions (34,34') have at least one section having a substantially rectilinear configuration.

The two lateral portions (34,34') of the sheet, thus defined, also have a main extension along the longitudinal axis (X).

In a first embodiment, the lateral portions (34,34') have a prismatic shape. In a further embodiment, the lateral portions (34,34') have a cylindrical shape.

However, other shapes of the lateral portions (34,34') of the sheet are not excluded.

Considering the section (C) belonging to the transverse plane (P), the lateral portions (34,34') of the sheet in a first embodiment have at least partially a curvilinear profile.

In a second embodiment, the lateral portions (34,34') of the sheet have an elongated profile in the vertical direction.

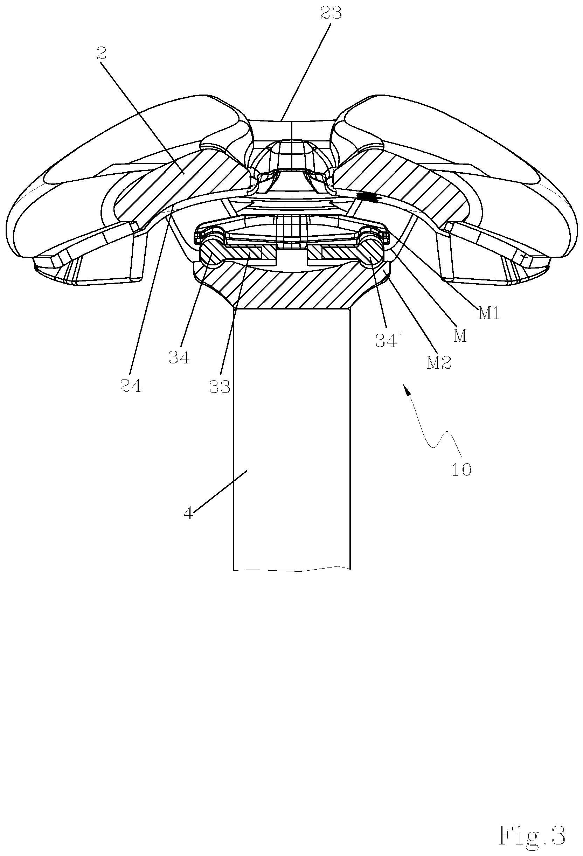

In the preferred embodiment, the lateral portions (34,34') of the sheet have a substantially oval profile, with major axis corresponding with the vertical direction, as illustrated in Fig.3.

Other sections, however, may be easily guessed and applied by a person skilled in the art.

A technical advantage given by the mentioned spatial configurations of the sheet, with respect to the support frames of the prior art described in the introductory part, is a greater resistance to stresses; in particular, the resistance to torsional loads and to perpendicular loads to the longitudinal axis (X) identified by the shell (2) and by the sheet is improved. Furthermore, the resistance to combinations of the aforesaid torsional loads and loads perpendicular to the longitudinal axis (X) and to combinations of said loads with stresses in different directions is improved.

Advantageously, therefore, the saddle (1) according to the present invention has an improved resistance to stresses and, consequently, a greater durability over time.

A further technical advantage given by the mentioned spatial configurations of the sheet, with respect to the support frames of the prior art, is an improved resistance to the vibrations transmitted while the bicycle is in movement.

Advantageously, therefore, the saddle (1) according to the present invention guarantees an improved level of comfort, reducing the intensity of the vibrations transmitted to the user during use of the bicycle.

Lastly, a further technical advantage given by the saddle (1) according to the present invention is that the three-dimensional sheet configuration of the support frame (3) allows a reduction in the turbulence caused by the air circulating, in particular, in the area underneath the saddle (1) and in the space comprised between the support frame (3) and the saddle (1); this feature results, advantageously, in improved aerodynamics of the saddle (1).

As already mentioned in previous paragraphs, the sheet of the support frame (3) is connected to the shell (2) by connection means (5).

The connections means (5) may be, in particular, one or more screws (6). According to a first embodiment, a plurality of screws (6) dismountably constrains the sheet to the upper surface (24) of the shell (2).

According to a second embodiment, a screw (6) constrains the front end portion (31) of the sheet to the front portion (21) of the shell (2), at the lower surface (24); furthermore, two screws (6) constrain the rear end portion (32) of the sheet to the rear portion (22) of the shell (2) at the lower surface (24). Alternatively, the connection means (5) may be made by means of at least one pocket structure; in detail, the pocket structure is obtained from the lower surface (24) of the shell: the sheet is arranged to be partially inserted inside said pocket, in which it remains constrained.

Preferably, at least one end portion of the sheet is inserted inside the pocket structure.

In a preferred, but not exclusive, embodiment, the sheet is connected to the shell (2) according to the following method: the front end portion (31) of the sheet is inserted into the pocket structure obtained in the lower surface (24) of the shell (2), at the front portion (21), whereas the rear end portion (32) of the sheet is constrained to the shell (2) by means of two screws (6) situated laterally with respect to the longitudinal axis (X), at the rear portion (22).

Other combinations and other positions of said connection means (5) are not excluded. Other connection means similar to those detailed are not excluded, provided that they are arranged to efficiently constrain the sheet to the shell (2).

As already mentioned in previous paragraphs, both the screws (6) and the pocket structures allow the sheet and, in general, the support frame (3) to be dismountably constrained to the shell (2).

Advantageously, therefore, the shell may, if necessary, be dismounted and replaced intuitively and rapidly.

The sheet is also arranged to allow connection of the saddle (1) to a saddle post (4).

The saddle post (4) is the element arranged to connect the saddle (1), by means of the support frame (3), to the remaining structure of the bicycle. In particular, the bicycle comprises a main frame, which forms the skeleton of the bicycle itself. Therefore, the saddle post (4) is the element arranged to connect the saddle (1) to the frame.

An object of the present invention is also an assembly (10) for a bicycle, comprising the saddle (1), the saddle post (4), constraining means (8), arranged to connect the saddle post (4) to the saddle (1), and coupling means, arranged to connect the saddle post (4) to the frame.

In detail, the saddle post (4) has, preferably, a tubular structure, arranged to be inserted at least partially into an upper portion of the frame.

In other words, the saddle post (4) has an upper portion, comprising a clamp element (M) arranged to be coupled to the support frame (3).

In the assembly according to the present invention, the clamp element (M) has at least one upper component (M1) and one lower component (M2), arranged to constrain the support frame (3). Preferably, the upper component (M1) and the lower component (M2) are arranged to constrain the lateral portions (34,34') of the sheet.

The constraint, preferably, is obtained by placing at least one portion of the sheet L between the upper component (M1) and the lower component (M2) of the clamp element (M); a plurality of constraining means (8), for example screws, bolts or similar elements, is arranged to move the upper component (M1) and the lower component (M2) towards each other, until they are tightened together: when the sheet is interposed between the upper component (M1) and the lower component (M2), the constraining means (8) cause the tight locking of the clamp element (M). The clamp element (M), intuitively, is arranged to perform the reverse operation, i.e. opening, in order to move the upper component (M1) and the lower component (M2) away from each other, in order to create a clearance with respect to the sheet or in order to dismount the saddle (1) from the saddle post (4). Clamp elements and saddle posts are known in the art: the clamp elements and the saddle posts in the prior art have standard dimensions and configuration, such as to allow and facilitate the replacement of a saddle, without having necessarily to replace the saddle post or other connection elements and without having to select a particular type of saddle to couple to the saddle post; the standard configurations and dimensions refer to support frames of the "stem" type known and used in the art.

In detail and in other words, both the lower component (M2) and the upper component (M1) typically have two structures with opposing concavity (downward concavity for the upper component, upward concavity for the lower component); the aforesaid concavities are arranged to accommodate and constrain the stem support frame of the prior art. The aforesaid concavities, in any case, are not arranged for and are not compatible with support frames comprising sheet structures, known in the prior art: in fact, the sheets of the prior art do not provide a three-dimensional structure complementary to the upper component (M1) and to the lower component (M2) of the clamp element (M). In the prior art, in fact, it is opted to use different constraint systems to clamps in order to couple sheet structures, typically a central screw pin.

Considering the saddle (1) according to the present invention, on the other hand, the clamp element (M) is shaped to accommodate and constrain reversibly at least one portion of the sheet L; in particular, the clamp element (M) is shaped to accommodate and constrain reversibly at least in part the lateral portions (34,34').

The upper component (M1) and the lower component (M2) are shaped or, in other words, formed to be mutually coupled and to create, on mutual coupling, the constraint of the sheet L, preferably at the lateral portions (34,34').

The constraint of the sheet L by the clamp element (M) may be advantageously created in an optimal zone of the lateral portions (34,34'), chosen by the user on the basis of their own anatomical features or preferences in use.

The constraint reversibly created by the upper component (M1) and by the lower component (M2), furthermore, may be varied, as will be seen in the paragraphs that follow, in order to satisfy specific needs of different users of the same bicycle or means comprising the saddle (1).

In detail, each upper component (M1) has a portion with upward concavity, configured to follow, partially or totally, an upper section of the profile of the lateral element (34,34'). Furthermore, each lower component (M2) has a portion with downward concavity, configured to follow and to accommodate at least partially a lower section of the profile of the lateral element (34,34'). The portions with upward concavity, two for each upper component (M1), and the portions with downward concavity, two for each lower component (M2), are preferably positioned in lateral zones of the clamp element (M) and are suitably spaced from each other, in order to correctly constrain the respective lateral portions (34,34') of the sheet (4).

In a first embodiment, the portion with upper concavity of the upper component (M1) and the portion with lower concavity of the lower component (M2) have a curvilinear section, in order to be, partially or totally, counter-shaped with respect to the cylindrical lateral portions (34,34'). For example, if the lateral portions (34,34') have a vertically elongated profile, the portion with upper concavity and the portion with lower concavity can be perfectly counter-shaped with respect to said lateral portions (34,34'); alternatively, they can have a curvilinear shape that follows only partially the vertically elongated profile.

In a second embodiment, the portion with upper concavity of the upper component (M1) and the portion with lower concavity of the lower component (M2) have a non-curvilinear section, in order to be, partially or totally, counter-shaped with respect to the prismatic lateral portions (34,34'). In further embodiments, the constraint is made between portions with upper and lower concavity with a curvilinear section and prismatic lateral portions (34,34'), or, vice versa, between portions with upper and lower concavity with a non-curvilinear section and cylindrical lateral portions (34,34'). Further combinations of geometries and further three-dimensional shapes may be intuitively identified by a person skilled in the art. Advantageously, thanks to the plurality of geometries and shapes usable for the lateral portions (34,34') and for the clamp element (M), the coupling between saddle post (4) and sheet L is particularly versatile and adaptable to the different types of sheet L and, consequently, of saddle (1).

The saddle (1) according to the present invention, in a further advantageous manner, thanks to the presence of the sheet comprising the lateral portions (34,34') described above, has the technical advantage of being compatible with the clamp element (M), in which the clamp element (M) has standard dimensions and configuration known in the art.

In other words, the longitudinal portions (34,34'), having a section (C) of thickness H greater than a thickness h of the medial portion (33), offer a partially or totally complementary surface with respect to the clamp elements of the prior art.

Advantageously, the clamp element (M), with the sheet interposed at least partially, may be tightened efficiently through the constraining means (8). Advantageously, as a consequence, the saddle (1) comprising the sheet (L) having lateral portions (34,34') may be constrained safely and stably to the saddle post (4).

Advantageously, the saddle (1) according to the present invention allows the constraint systems already used in saddles provided with support frames of the "stem" type to be exploited, without having to alter or replace the components already present and functioning.

Advantageously, therefore, the saddle (1) prevents the wasting of materials. The saddle post (4), furthermore, comprises below a coupling portion, comprising coupling means. The coupling means is arranged to allow coupling and adjustment of the saddle post (4) with respect to the frame of the bicycle.

The coupling means is of the type known in the art.

The assembly (10) according to the present invention is advantageously arranged to allow at least one of the following adjustment operations of the saddle (1) with respect to the frame of the bicycle and/or with respect to a support plane of the bicycle:
The assembly (10) according to the present invention allows adjustment of the positioning of the saddle (1) relative to the frame in the longitudinal direction (X), between a maximum retraction position and a maximum advancement position: the clamp element (M), in fact, may constrain, or in other words couple, the lateral components (34,34') of the sheet in different positions, along their longitudinal axis (X). If the clamp element (M) is coupled near the rear end portion (32), then the saddle (1) is in a more advanced position with respect to the frame; vice versa, if the clamp element (M) is coupled near the front end portion (31), then the saddle (1) is in a more retracted position with respect to the frame.

Furthermore, the assembly (10) according to the present invention allows rotation of the saddle (1) around a rotation axis transverse to the longitudinal direction (X) and belonging to a substantially horizontal plane, between a maximum backward rotation position and a maximum forward rotation position. Preferably, rotation of the saddle (1) around the rotation axis is adjusted by the constraining means (8) of the clamp element, which are further arranged to behave as regulation means, with respect to the rotation. However, other means or systems of regulation of rotation known in the art are not excluded.

Lastly, the assembly (10) according to the present invention allows adjustment of the positioning height of the saddle (1) in the vertical direction, between a minimum height, closest to the support plane of the bicycle, and a maximum height, furthest from the support plane of the bicycle. Regulation of the height occurs preferably, but not exclusively, by extraction or insertion and subsequent fixing of the saddle post inside the frame.

Advantageously, therefore, it is possible to obtain a fine adjustment of the positioning with respect to the longitudinal axis (X) and to the vertical direction, and a precise control of the inclination of the saddle (1) each time, according to the user's needs.

Advantageously, in conclusion, the saddle (1), thanks to the improved flexibility of the sheet support element (3), is improved with respect to the prior art from the perspective of adaptation to the user's anatomy; this aspect, by means of the assembly (10) according to the present invention, allows the transfer of energy during use of the bicycle by the user to be improved: in particular, the transfer of energy to the pedals is improved.

In conclusion, the saddle (1) allows, in a very advantageous way, the resistance to stresses and the level of comfort during use of the bicycle to be improved; furthermore, the assembly comprising the saddle (1) is versatile and easily adjustable.

## Claims

1. A saddle (1) for a bicycle comprising:
- a shell (2) which has a longitudinal axis (X) and is provided with a front portion (21) and a rear portion (22), aligned along the longitudinal axis (X);
- a support frame (3), connected to the shell (2), which is arranged to be connected to a saddle post (4) and which comprises a sheet having a section (C) belonging to a transverse plane (P) perpendicular to the longitudinal axis (X);
**characterised in that:** the sheet comprises a medial portion (33) and two lateral portions (34,34'); in the section (C), the lateral portions (34,34') have a thickness H, greater than a thickness h of the medial portion (33).

2. The saddle (1) according to claim 1, wherein, in the section (C), the lateral portions (34,34') have, at least partially, a curvilinear profile.

3. The saddle (1) according to one of claims 1 or 2 wherein, in the section (C), the lateral portions (34,34') have an elongated profile in the vertical direction.

4. The saddle (1) according to claim 1, wherein the support frame (3) is dismountably constrained to the shell (2).

5. The saddle (1) according to claim 4, wherein a front end portion (31) of the sheet is constrained at the front portion (21) of the shell (2) and a rear end portion (32) of the sheet is constrained at the rear portion (22) of the shell.

6. The saddle (1) according to claim 4, wherein the shell (2) and the support frame (3) are constrained to each other by connection means (5) comprising one or more screws (6).

7. The saddle (1) according to claim 6, wherein one screw (6) constrains the front end portion (31) of the sheet to the shell (2) and two screws (6) constrain the rear end portion (31) of the sheet to the shell (2).

8. The saddle (1) according to claim 4, wherein the connection means (5) comprises at least one pocket structure obtained from the shell (2) and arranged to interlockingly constrain the sheet.

9. The saddle (1) according to claim 8, wherein a pocket structure constrains the front end portion (32) of the sheet.

10. The saddle (1) according to claim 9, wherein two screws (6) constrain the rear end portion (32) of the sheet to the shell (2).

11. An assembly (10) for a bicycle having a main frame, comprising:
- a saddle (1) comprising a shell (1), arranged for the seated support of a user, and a support frame (3) arranged to be connected to the shell (2);
- a saddle post (4), comprising constraining means (8) arranged to constrain the saddle post (4) to the saddle (1) and coupling means arranged to constrain the saddle post (4) to the frame of the bicycle;
**characterised in that** the saddle (1) is of the type claimed in any one of the preceding claims.

12. The assembly for a bicycle, wherein the constraining means (8) further allows to carry out at least one of the following operations:
- adjusting the positioning of the saddle (1) relative to the frame in the longitudinal direction (X), between a maximum retraction position and a maximum advancement position;
- rotating the saddle (1) around a rotation axis transverse to the longitudinal direction (X) and belonging to a substantially horizontal plane, between a maximum backward rotation position and a maximum forward rotation position.

13. The assembly for a bicycle according to claim 11, wherein the coupling means further allows to adjust the positioning height of the saddle (1) in the vertical direction, between a minimum height and a maximum height.
